# EUROPÄISCHE PATENTSCHRIFT

(11) **EP 3 097 537 B1**
(45) Veröffentlichungstag und Bekanntmachung des Hinweises auf die Patenterteilung: **07.08.2019**
(21) Anmeldenummer: 14805921.5
(22) Anmeldetag: 02.12.2014
(51) Int. Cl.: G06T 7/80

(54) **VERFAHREN UND STEUERGERÄT ZUM ERKENNEN EINER VERÄNDERUNG EINES RELATIVEN GIERWINKELS INNERHALB EINES STEREO-VIDEO-SYSTEMS FÜR EIN FAHRZEUG**
METHOD AND CONTROLLER FOR DETECTING A CHANGE OF YAW ANGLE OF A VEHICLE-MOUNTED STEREO VIDEO SYSTEM
PROCÉDÉ ET CONTRÔLEUR POUR DÉTECTER UN CHANGEMENT D'ANGLE DE LACET D'UN SYSTÈME DE VIDÉO STÉRÉO MONTÉ SUR VÉHICULE

(30) Priorität: 24.01.2014 DE 102014201271
(43) Veröffentlichungstag der Anmeldung: 30.11.2016
(73) Patentinhaber: Robert Bosch GmbH, 70442 Stuttgart (DE)
(72) Erfinder: HILSEBECHER, Joerg, 31135 Hildesheim (DE); MEYER, Bastian, 31789 Hameln (DE)
(86) Internationale Anmeldenummer: PCT/EP2014/076281
(87) Internationale Veröffentlichungsnummer: WO 2015/110207

(56) Entgegenhaltungen:
- THAO DANG ET AL: "Self-calibration for Active Automotive Stereo Vision", 2006 IEEE INTELLIGENT VEHICLES SYMPOSIUM : MEGURO-KU, JAPAN, 13 - 15 JUNE 2006, IEEE, PISCATAWAY, NJ, USA, 13. Juni 2006 (2006-06-13), Seiten 364-369, XP010937040, DOI: 10.1109/IVS.2006.1689655 ISBN: 978-4-901122-86-3
- HORN B K P ET AL: "DETERMINING OPTICAL FLOW", ARTIFICIAL INTELLIGENCE, ELSEVIER SCIENCE PUBLISHER B.V., AMSTERDAM, NL, Bd. 17, 1. August 1981 (1981-08-01), Seiten 185-203, XP000195787, ISSN: 0004-3702, DOI: 10.1016/0004-3702(81)90024-2
- MASAFUMI NAKAGAWA ET AL: "A Stereo Self-adjustment Methodology for Resuming Active Camera Operation", 13. Januar 2009 (2009-01-13), LECTURE NOTES IN COMPUTER SCIENCE; VOL. 5414; PROCEEDINGS OF THE 3RD PACIFIC RIM SYMPOSIUM ON ADVANCES IN IMAGE AND VIDEO TECHNOLOGY, SPRINGER BERLIN HEIDELBERG, BERLIN, HEIDELBERG, PAGE(S) 680 - 691, XP019137273, ISBN: 978-3-540-92956-7 Zusammenfassung Seite 681, Zeile 23 - Seite 683, Zeile 3 Abbildungen 2,3
- MORAT J ET AL: "Evaluation Method for Automotive Stereo-Vision Systems", INTELLIGENT VEHICLES SYMPOSIUM, 2007 IEEE, IEEE, PI, 1. Juni 2007 (2007-06-01), Seiten 202-208, XP031126945, ISBN: 978-1-4244-1067-5

## Beschreibung

### Stand der Technik

Die vorliegende Erfindung bezieht sich auf ein Verfahren zum Erkennen einer Veränderung des relativen Gierwinkels an einem Stereo-Video-System für ein Fahrzeug oder anderes bewegtes System, beispielsweise der Robotik, auf ein entsprechendes Steuergerät sowie auf ein entsprechendes Computerprogrammprodukt.

Bei einer Stereo-Kamera wirken sich bereits geringe Veränderungen der Winkel zwischen den Kameras auf eine Genauigkeit des Gesamtsystems aus.

Die DE 10 2004 062 275 A1 beschreibt ein Verfahren und eine Vorrichtung zum Ermitteln eines Kalibrierparameters einer Stereokamera.

THAO DANG ET AL: "Self-calibration for Active Automotive Stereo Vision", 2006 IEEE INTELLIGENT VEHICLES SYMPOSIUM : MEGURO-KU, JAPAN, 13-15 JUNE 2006, IEEE, PISCATAWAY, NJ, USA, 13. Juni 2006, Seiten 364-369, DOI: 10.1109/IVS.2006.1689655, ISBN: 978-4-901122-86-3 befasst sich mit einer Selbstkalibrierung für aktives Stereosehen im Automotivbereich. Das beschriebene Verfahren basiert auf einer Minimierung eines Reprojektionsfehlers verfolgter 3D-Objektpunkte und der Epipolarbedingung.

HORN B K P ET AL: "DETERMINING OPTICAL FLOW", ARTIFICIAL INTELLIGENCE, ELSEVIER SCIENCE PUBLISHER B.V., AMSTERDAM, NL, Bd. 17, 1. August 1981, Seiten 185-203, ISSN: 0004-3702, DOI: 10.1016/0004-3702(81)90024-2 befasst sich mit einer Bestimmung des Optischen Flusses.

### Offenbarung der Erfindung

Vor diesem Hintergrund wird mit der vorliegenden Erfindung ein verbessertes Verfahren zum Erkennen einer Veränderung des relativen Gierwinkels an einem Stereo-Video-System für ein Fahrzeug, weiterhin ein verbessertes Steuergerät, das dieses Verfahren verwendet sowie schließlich ein entsprechendes Computerprogrammprodukt gemäß den Hauptansprüchen vorgestellt. Vorteilhafte Ausgestaltungen ergeben sich aus den jeweiligen Unteransprüchen und der nachfolgenden Beschreibung.

Eine auf Stereoskopie basierende räumliche Erkennung von Objekten weist eine hohe Erkennungswahrscheinlichkeit und eine hohe Erkennungsgeschwindigkeit auf. Dabei funktioniert die Stereoskopie auch bei ruhendem Stereo-Kamera-System. Die Stereoskopie ist lediglich anfällig für Änderungen einer relativen Ausrichtung der zwei Kameras. Beispielsweise durch Wärme- oder Kälteeinwirkung kann eine der Kameras gegenüber der anderen Kamera leicht verdreht werden. Dann weist ein erster Referenzpunkt der ersten Kamera eine inkorrekte Translokation gegenüber einem zweiten Referenzpunkt der zweiten Kamera auf, wobei der erste und der zweite Referenzpunkt den gleichen Punkt in einem Aufnahmebereich der Kameras repräsentieren. Durch diese Translokation werden Entfernungen zu erkannten Objekten falsch ermittelt. Flächige Objekte werden verkippt wahrgenommen. Um den Winkelfehler auszugleichen, kann zumindest einer der Referenzpunkte angepasst werden.

Basierend auf einer monokularen Auswertung zeitlich und räumlich versetzter Bilder einer der Kameras können Objekte ebenfalls räumlich aufgelöst werden. Der räumliche Abstand zwischen den Bildern wirkt dabei ähnlich, wie eine Stereobasis zwischen den Kameras bei der Stereoskopie. Zwischen den Bildern kann dann eine Korrespondenz-Transformation bestimmt werden, die eine Veränderung zwischen den Bildern repräsentiert. Im Gegensatz zur Stereoskopie kann die monokulare Auswertung keine Empfindlichkeit gegenüber einem relativen Winkelfehler zwischen zwei Kameras aufweisen.

Die Stereoskopie mit zwei Kameras kann also durch die monokulare Auswertung einer der Kameras über die Korrespondenz-Transformation abgesichert werden.

Insbesondere flächige, stationäre Objekte können dazu dienen, den Winkelfehler zu kompensieren, indem der Winkel so kompensiert wird, dass die erfassten Objekte mit beiden Messverfahren (Stereoskopisch, Monoskopisch) identisch gemessen werden.

Es wird ein Verfahren zum Erkennen einer Veränderung eines relativen Gierwinkels an einem Stereo-Video-System für ein Fahrzeug vorgestellt, wobei das Stereo-Video-System eine erste Kamera und eine zweite Kamera aufweist, die auf einen gemeinsamen Erfassungsbereich ausgerichtet sind und um eine Stereobasis zueinander versetzt angeordnet sind, wobei das Verfahren die folgenden Schritte aufweist:
Einlesen eines Bildpaars von den Kameras und eines weiteren Bilds von der ersten Kamera, wobei das Bildpaar ein, zu einem ersten Zeitpunkt erfasstes, erstes Bild der ersten Kamera und ein, zu dem ersten Zeitpunkt erfasstes, zweites Bild der zweiten Kamera umfasst und das weitere Bild zu einem, zu dem ersten Zeitpunkt zeitlich versetzten, weiteren Zeitpunkt erfasst ist;
Ermitteln einer stationären Fläche in dem Erfassungsbereich (vorteilhaft ist insbesondere eine Bodenfläche) unter Verwendung des Bildpaars, der Stereobasis und einer Stereoskopie-Verarbeitungsvorschrift, um einen Neigungswinkel, vorteilhaft einen Nickwinkel zur stationären Fläche, des Stereo-Video-Systems zu erhalten;
Bestimmen der stationären Fläche unter Verwendung des ersten Bilds des Bildpaars, des weiteren Bilds und einer Korrespondenz-Transformations - Verarbeitungsvorschrift, um einen Vergleichswinkel zu erhalten, wobei eine Korrespondenz-Transformation zwischen dem ersten Bild und dem weiteren Bild erfasst wird, wenn sich das Stereo-Video-System zwischen dem ersten Zeitpunkt und dem weiteren Zeitpunkt um eine Wegstrecke bewegt hat; und
Vergleichen des Neigungswinkels mit dem Vergleichswinkel, also der beiden Flächenneigungen, unter Verwendung einer Vergleichsvorschrift, um die Veränderung des relativen Gierwinkels zu erkennen.

Unter einer Veränderung des relativen Gierwinkels, auch Gierwinkelversatz genannt, kann eine Differenz von Seitenrichtungswinkeln der zwei Kameras verstanden werden. Eine Stereobasis kann ein räumlicher Abstand der Kameras sein. Ein Bild kann durch eine Bildinformation von zeilenweise und reihenweise angeordneten Bildpunkten repräsentiert werden. Eine stationäre Fläche kann eine Fahrbahnoberfläche sein und kann sich relativ zu dem Fahrzeug bewegen. Eine Stereoskopie-Verarbeitungsvorschrift kann eine Triangulation repräsentieren. Eine Korrespondenz-Transformation-Verarbeitungsvorschrift kann zum Erzeugen eines Vektorfelds der Korrespondenz-Transformation, beispielsweise des optischen Flusses, zwischen zwei Bildern verwendet werden. Der Neigungswinkel ist dabei der Winkel, der zwischen einer von dem Stereo-Video-System ermittelten Ebene und einer Referenzebene aufgespannt wird. Der Neigungswinkel ist somit dann ungleich Null, wenn die ermittelte Ebene und die Referenzebene nicht übereinstimmen. Sowohl die ermittelte Ebene als auch die Referenzebene sind virtuelle Ebenen, die auf Basis der stationären Ebene und zwei unterschiedlichen Verarbeitungsvorschriften ermittelt werden.

Es kann zumindest ein weiteres Bildpaar eingelesen werden, wobei das weitere Bildpaar zeitlich versetzt zu dem Bildpaar erfasst ist. Es kann ein weiterer Neigungswinkel unter Verwendung des weiteren Bildpaars ermittelt werden. Das Verfahren kann einen Schritt der Bewegungs-Erkennung aufweisen, in dem der Neigungswinkel mit dem weiteren Neigungswinkel verglichen wird, um eine Nickbewegung des Stereo-Video-Systems zu erkennen. Wenn das an dem Fahrzeug befestigte Stereo-Video-System aufgrund einer Eigenbewegung des Fahrzeugs eine Nickbewegung ausführt, verändert sich ein Blickwinkel der Kameras auf die stationäre Fläche. Die resultierende Veränderung des erkannten Neigungswinkels stellt jedoch keine Dekalibrierung dar. Durch eine Bewegungs-Erkennung können falsche Aussagen über die Veränderung des relativen Gierwinkels vermieden werden.

Das weitere Bild kann als ein Bestandteil des weiteren Bildpaars eingelesen werden. Durch eine Mehrfachverwendung von Bildern bzw. Bildinformationen kann eine verwendete Rechen- und Speicherkapazität verringert werden.

Der Schritt des Vergleichens kann ausgeführt werden, wenn die Nickbewegung, die sich hier und im Folgenden nicht nur auf eine Bodenfläche sondern auf eine Translation der beobachteten stationären Fläche (z.B. durch Nicken oder Lenkbewegungen) beziehen soll, kleiner als ein Schwellenwert ist. Wenn die Nickbewegung kleiner als der Schwellenwert ist, kann eine Fehlerkennung der Veränderung des relativen Gierwinkels vermieden werden.

Der Vergleichswinkel kann unter Verwendung der Nickbewegung bestimmt werden. Die Nickbewegung kann beim Erkennen des Vergleichswinkels berücksichtigt werden. Dann kann das Stereo-Video-System auch bei bewegtem Fahrzeug kalibriert werden.

Das Verfahren kann einen Schritt des Rekalibrierens des Stereo-Video-Systems aufweisen, wobei der relative Gierwinkel der Kameras unter Verwendung der Veränderung des relativen Gierwinkels rekalibriert wird, wenn die Veränderung des relativen Gierwinkels größer als ein Toleranzwert ist. Es kann ein Referenzpunkt einer der Kameras angepasst werden. Ebenso können die Referenzpunkte beider Kameras angepasst werden. Ein Referenzpunkt kann ein Referenzkoordinatenursprung der jeweiligen Kamera sein. Der Referenzpunkt kann mit einer Bildpunktkoordinate der jeweiligen Kamera übereinstimmen. Durch das Rekalibrieren kann das Stereo-Video-System dauerhaft kalibriert gehalten werden, auch wenn die Kameras aufgrund äußerer Einflüsse physikalisch gegeneinander verdreht werden. Dabei kann bis zu einem gewissen Grad mit einer Veränderung des Gierwinkels auch ein entstandener Fehler im Abstand der Kameras kompensiert werden.

Das Rekalibrieren kann schrittweise erfolgen, wobei die einzelnen Gierwinkel jeweils maximal um einen vorgegebenen Winkel korrigiert werden, um das Stereo-Video-System zu rekalibrieren. Durch eine Begrenzung des Winkelschritts beim Kalibrieren kann ein Überschwingen des Kalibrierens vermieden werden. Durch die Begrenzung kann das Stereo-Video-System schrittweise in den gewünschten Zustand versetzt werden.

Im Schritt des Bestimmens können Flussvektoren zwischen dem ersten Bild und dem weiteren Bild spaltenweise oder zeilenweise bestimmt werden, um die stationäre Fläche zu finden und den Vergleichswinkel zu bestimmen. Durch die zeilenweise oder spaltenweise Suche der stationären Fläche kann das Verfahren mit einer geringen Rechenleistung schnell durchgeführt werden.

Weiterhin wird ein Steuergerät zum Erkennen einer Veränderung eines relativen Gierwinkels an einem Stereo-Video-System für ein Fahrzeug vorgestellt, wobei das Stereo-Video-System eine erste Kamera und eine zweite Kamera aufweist, die auf einen gemeinsamen Erfassungsbereich ausgerichtet sind und um eine Stereobasis zueinander versetzt angeordnet sind, wobei das Steuergerät die folgenden Merkmale aufweist:
eine Einrichtung zum Einlesen eines Bildpaars von den Kameras und eines weiteren Bilds von der ersten Kamera, wobei das Bildpaar ein, zu einem ersten Zeitpunkt erfasstes erstes Bild der ersten Kamera und ein, zu dem ersten Zeitpunkt erfasstes zweites Bild der zweiten Kamera umfasst und das weitere Bild zu einem, zu dem ersten Zeitpunkt zeitlich versetzten, weiteren Zeitpunkt erfasst ist;
eine Einrichtung zum Ermitteln einer stationären Fläche in dem Erfassungsbereich unter Verwendung des Bildpaars, der Stereobasis und einer Stereoskopie-Verarbeitungsvorschrift, um einen Neigungswinkel des Stereo-Video-Systems zu erhalten;
eine Einrichtung zum Bestimmen der stationären Fläche unter Verwendung des ersten Bilds des Bildpaars, des weiteren Bilds und einer Korrespondenz-Transformations-Verarbeitungsvorschrift, um einen Vergleichswinkel zu erhalten, wobei eine Korrespondenz-Transformation zwischen dem ersten Bild und dem weiteren Bild erfasst wird, wenn sich das Stereo-Video-System zwischen dem ersten Zeitpunkt und dem weiteren Zeitpunkt um eine Wegstrecke bewegt hat; und
eine Einrichtung zum Vergleichen des Neigungswinkels mit dem Vergleichswinkel unter Verwendung einer Vergleichsvorschrift, um die Veränderung des relativen Gierwinkels zu erkennen.

Auch durch diese Ausführungsvariante der Erfindung in Form eines Steuergeräts kann die der Erfindung zugrunde liegende Aufgabe schnell und effizient gelöst werden.

Unter einem Steuergerät kann vorliegend ein elektrisches Gerät verstanden werden, das Sensorsignale verarbeitet und in Abhängigkeit davon Steuer- und/oder Datensignale ausgibt. Das Steuergerät kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen des Steuergeräts beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert sein kann und zur Durchführung des Verfahrens nach einer der vorstehend beschriebenen Ausführungsformen verwendet wird, wenn das Programmprodukt auf einem Computer oder einer Vorrichtung ausgeführt wird.

Die Term "Veränderung des relativen Gierwinkels" sowie die teilweise verwendete Bezeichnung "Gierwinkelversatz" beziehen sich auf einen relativen Winkel zwischen Hauptblickrichtungen zweier Kameras in einem Stereo-Video-System. Der genannte optische Fluss ist nur eine Variante zur Bestimmung der zweiten Flächenneigung. Andere Korrespondenzverfahren sind hier denkbar (z.B. eine Homografie-Bestimmung). Der Kern des Algorithmus besteht aus der Bestimmung von Flächenneigungen (Vorteilhaft: Bodenfläche) mit zwei unterschiedlichen Verfahren (räumlich, zeitlich). Generell ist das Verfahren auch für mehr als zwei Kameras anwendbar. Für den Mono-Kamera-Pfad kann noch das Verfahren über die Neigungsschätzung via Fluchtpunktbestimmung als vorteilhafte Ausbildung dienen.
Die Erfindung wird nachstehend anhand der beigefügten Zeichnungen beispielhaft näher erläutert. Es zeigen:
- Fig. 1: eine Darstellung eines Fahrzeugs mit einem Stereo-Video-System und einem Steuergerät zum Erkennen einer Veränderung des relativen Gierwinkels gemäß einem Ausführungsbeispiel der vorliegenden Erfindung;
- Fig. 2: ein Blockschaltbild eines Steuergeräts zum Erkennen einer Veränderung des relativen Gierwinkels an einem Stereo-Video-System für ein Fahrzeug gemäß einem Ausführungsbeispiel der vorliegenden Erfindung;
- Fig. 3: ein Ablaufdiagramm eines Verfahrens zum Erkennen einer Veränderung des relativen Gierwinkels an einem Stereo-Video-System für ein Fahrzeug gemäß einem Ausführungsbeispiel der vorliegenden Erfindung; und
- Fig. 4: ein Flussdiagramm eines Ablaufs eines Verfahrens zum Erkennen einer Veränderung des relativen Gierwinkels an einem Stereo-Video-System für ein Fahrzeug gemäß einem Ausführungsbeispiel der vorliegenden Erfindung.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

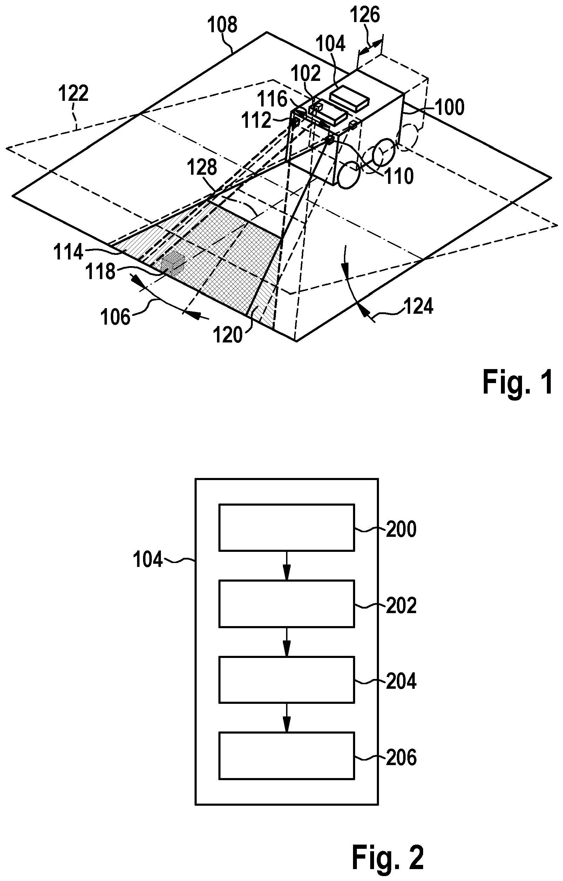

Fig. 1 zeigt eine Darstellung eines Fahrzeugs 100 mit einem Stereo-Video-System 102 und einem Steuergerät 104 zum Erkennen einer Veränderung des relativen Gierwinkels 106, auch Gierwinkelversatz genannt, gemäß einem Ausführungsbeispiel der vorliegenden Erfindung. Das Steuergerät 104 kann Teil des Stereo-Video-Systems 102 sein oder als eine separate Vorrichtung ausgeführt sein.

Das Fahrzeug 100 bewegt sich auf einer ebenen Fläche 108 vorwärts. Das Stereo-Video-System 102 weist eine erste Kamera 110 und eine zweite Kamera 112 auf. Die Kameras 110, 112 sind auf einen gemeinsamen Erfassungsbereich 114 in Fahrtrichtung vor dem Fahrzeug 100 gerichtet. Die erste Kamera 110 ist im Fahrzeug 100 links angeordnet. Die zweite Kamera 112 ist im Fahrzeug 100 rechts angeordnet. Die Kameras 110, 112 weisen einen Abstand 116 zueinander auf. Der Abstand 116 kann als Stereobasis 116 bezeichnet werden. Das Stereo-Video-System 102 ist dazu ausgebildet, unter Verwendung der Stereobasis 116 und Stereoskopie Objekte 118 in dem Erfassungsbereich 114 räumlich zu erfassen und beispielsweise Positionen der Objekte 118 relativ zu dem Fahrzeug 100 für Sicherheits- und Komfortfunktionen des Fahrzeugs 100 bereitzustellen.

Wenn ein, der Einfachheit halber ortsfestes Objekt 118 in dem Erfassungsbereich 114 von beiden Kameras 114 erfasst wird, werden zu dem Objekt 118 zugeordnete Bildpunkte in beiden Kamerabildern als das Objekt 118 klassifiziert. Koordinaten der Bildpunkte ergeben jeweils einen Höhenwinkel und einen Seitenwinkel von der jeweiligen Kamera 110, 112 zu dem Objekt 118. Durch Triangulation mit der bekannten Stereobasis 116 wird eine Entfernung des Objekts 118 vom Fahrzeug 100 berechnet.

Hier ist eine der Kameras 112 gegenüber einer Ausgangsposition um die hier beispielhaft dargestellte Veränderung des relativen Gierwinkels 106 verdreht. Daraus ergeben sich falsche Höhenwinkel und/oder Seitenwinkel in den Bildpunkten, da die verdrehte Kamera 112 einen verschobenen Erfassungsbereich 120 aufweist. In den Bildpunkten des verschobenen Erfassungsbereichs 120 ist das Objekt 118 gegenüber dem unverschobenen Erfassungsbereich 114 seitlich versetzt. Die Entfernung des Objekts 118 zum Fahrzeug 100 wird jetzt falsch berechnet.

Wenn von den dekalibrierten Kameras 110, 112 die Fläche 108 erfasst wird, dann wird die Fläche 108 durch die Veränderung des relativen Gierwinkels 106 als schräge Fläche 122 erkannt, die so nicht existiert. Die schräge Fläche 122 ist rein virtuell. Die schräge Fläche 122 spannt gegenüber der ebenen Fläche 108 einen Neigungswinkel124 auf.

Das Steuergerät 104 ist dazu ausgebildet, ein weiteres Kamerabild, in diesem Ausführungsbeispiel von der linken Kamera 110, einzulesen. Das weitere Kamerabild ist in diesem Ausführungsbeispiel aufgenommen worden, als das Fahrzeug 100 um eine Wegstrecke 126 zurück versetzt angeordnet war. Das weitere Kamerabild kann auch eingelesen werden, nachdem das Fahrzeug 100 eine weitere Wegstrecke zurückgelegt hat. Wenn das Objekt 118 in dem weiteren Kamerabild erfasst wird, dann sind seine Bildkoordinaten um einen zu der Wegstrecke 126 korrespondierenden Betrag zwischen dem weiteren Bild und dem aktuellen Kamerabild verschoben. Dieser Betrag kann als Vektor mit Betrag und Richtung ausgedrückt werden. Der Vektor kann als optischer Fluss bezeichnet werden.

Da eine einzelne Kamera keine Veränderung des relativen Gierwinkels aufweisen kann, wird die Fläche 108 ohne Neigungswinkel, also mit einem Neigungswinkel gleich Null, erkannt, wenn die ebene Fläche 108 in dem weiteren Bild erfasst wird.

Durch den hier vorgestellten Ansatz werden die Resultate der Erkennung der ebenen Fläche 108 zusammengeführt. Die Erkennung der Fläche 108 im Stereo-Video-System 102 wird also durch den optischen Fluss abgesichert. Wenn die Veränderung des relativen Gierwinkels 106 erkannt wird, dann können die Kameras 110, 112 neu kalibriert werden, bis auch im Stereo-Video-System 102 die Fläche 108 ohne den Neigungswinkel 124 erkannt wird. Das Stereo-Video-System 102 kann kalibriert werden, indem in einem oder beiden Kamerabildern eine Gierwinkelreferenz angepasst wird.
Durch die Verwendung von bereits vorhandenen Zwischen-Ergebnissen werden Ressourcen geschont. Beispielsweise werden der optische Fluss, die Disparität und die Fahrbahnoberfläche 108 bereits für die Objektdetektion benötigt und sind auf den aktuellen Stereo-Video-Steuergeräten 102 (teilweise in FPGA-Hardware) implementiert und abrufbar.

Die ermittelte Fahrbahnoberfläche 122 auf Basis des Stereo-Video-Kamerasystems 102 kann mit entsprechenden Daten aus dem optischen Fluss plausibilisiert werden.

Die Fahrbahnoberfläche 108 kann aus dem optischen Fluss ohne die Notwendigkeit einer vollständigen Implementierung von SfM (Structure from Motion), bei dem dreidimensionale Strukturen aus zweidimensionalen Bildsequenzen bestimmt werden können, bestimmt werden. Dazu kann die Fahrbahnoberfläche 108 spaltenweise inkrementell berechnet werden. Für jede Spalte werden beginnend in der untersten Zeile des Bildes alle Flussvektoren eingesammelt, die zu der Fahrbahnoberfläche 108 gehören. Anschließend wird mit einem statistischen Schätzverfahren der optimale Neigungswinkel der Fahrbahn 108 bestimmt. Dieser Ansatz ist linear und für ein Steuergerät 104 optimiert.

Fig. 2 zeigt ein Blockschaltbild eines Steuergeräts 104 zum Erkennen einer Veränderung des relativen Gierwinkels an einem Stereo-Video-System für ein Fahrzeug gemäß einem Ausführungsbeispiel der vorliegenden Erfindung. Das Steuergerät 104 kann in dem Fahrzeug aus Fig. 1 verwendet werden. Das Steuergerät 104 weist eine Einrichtung 200 zum Einlesen, eine Einrichtung 202 zum Ermitteln, eine Einrichtung 204 zum Bestimmen und eine Einrichtung 206 zum Vergleichen auf. Das Stereo-Video-System weist wie in Fig. 1 eine erste Kamera und eine zweite Kamera auf, die auf einen gemeinsamen Erfassungsbereich ausgerichtet sind und um eine Stereobasis zueinander versetzt angeordnet sind. Die Einrichtung 200 zum Einlesen ist dazu ausgebildet, ein Bildpaar von den Kameras und ein weiteres Bild von der ersten Kamera einzulesen. Das Bildpaar umfasst ein, zu einem ersten Zeitpunkt erfasstes erstes Bild der ersten Kamera und ein, zu dem ersten Zeitpunkt erfasstes zweites Bild der zweiten Kamera. Das weitere Bild ist zu einem, zu dem ersten Zeitpunkt zeitlich versetzten, weiteren Zeitpunkt erfasst. Die Einrichtung 202 zum Ermitteln ist dazu ausgebildet, eine stationäre Fläche in dem Erfassungsbereich unter Verwendung des Bildpaars, der Stereobasis und einer Stereoskopie-Verarbeitungsvorschrift zu ermitteln, um einen Neigungswinkel zu der stationären Fläche im Stereo-Video-System zu erhalten. Die Einrichtung 204 zum Bestimmen ist dazu ausgebildet, die stationäre Fläche unter Verwendung des ersten Bilds des Bildpaars, des weiteren Bilds und einer Fluss-Verarbeitungsvorschrift zu bestimmen, um einen Vergleichswinkel zu erhalten. Dabei wird ein optischer Fluss zwischen dem ersten Bild und dem weiteren Bild erfasst, wenn sich das Stereo-Video-System zwischen dem ersten Zeitpunkt und dem weiteren Zeitpunkt um eine Wegstrecke bewegt hat. Die Einrichtung 206 zum Vergleichen ist dazu ausgebildet, den Neigungswinkel mit dem Vergleichswinkel unter Verwendung einer Vergleichsvorschrift zu vergleichen, um eine Veränderung des relativen Gierwinkels zu erkennen.

In einem Ausführungsbeispiel weist das Steuergerät 104 die Einrichtung 200 zum Einlesen und die Einrichtung 206 zum Vergleichen auf. Die Einrichtung 200 zum Einlesen ist dazu ausgebildet, den Neigungswinkel der stationären Fläche aus dem Stereo-Video-System und den Vergleichswinkel einzulesen. Die Einrichtung 206 zum Vergleichen ist dazu ausgebildet, den Neigungswinkel mit dem Vergleichswinkel unter Verwendung einer Vergleichsvorschrift zu vergleichen, um die Veränderung des relativen Gierwinkels zu erkennen.

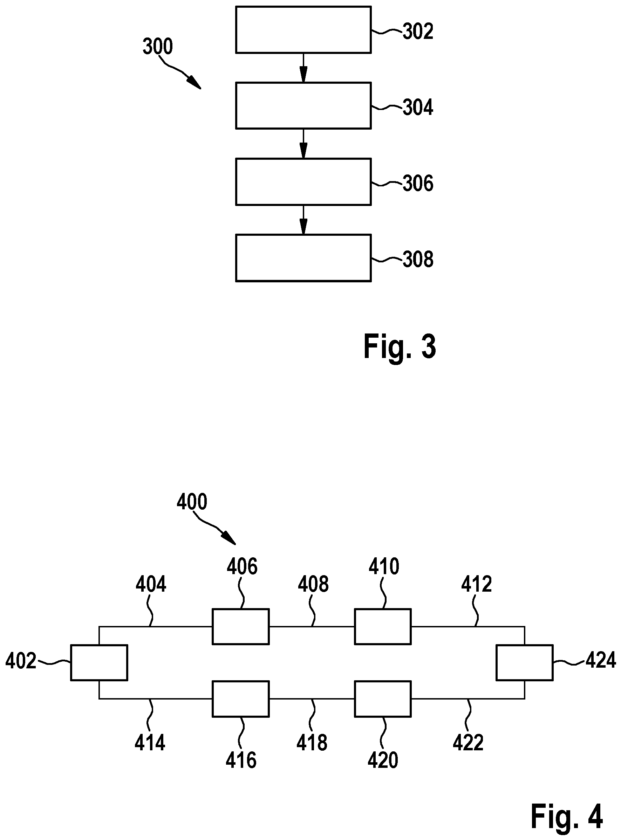

Fig. 3 zeigt ein Ablaufdiagramm eines Verfahrens 300 zum Erkennen einer Veränderung des relativen Gierwinkels an einem Stereo-Video-System für ein Fahrzeug gemäß einem Ausführungsbeispiel der vorliegenden Erfindung. Das Verfahren kann auf einem Steuergerät, wie in den Figuren 1 und 2 ausgeführt werden. Das Verfahren 300 weist einen Schritt 302 des Einlesens, einen Schritt 304 des Ermittelns, einen Schritt 306 des Bestimmens und einen Schritt 308 des Vergleichens auf. Das Stereo-Video-System weist eine erste Kamera und eine zweite Kamera auf, die auf einen gemeinsamen Erfassungsbereich ausgerichtet sind und um eine Stereobasis zueinander versetzt angeordnet sind. Im Schritt 302 des Einlesens werden ein Bildpaar von den Kameras und ein weiteres Bild von der ersten Kamera eingelesen. Das Bildpaar umfasst ein, zu einem ersten Zeitpunkt erfasstes erstes Bild der ersten Kamera und ein, zu dem ersten Zeitpunkt erfasstes zweites Bild der zweiten Kamera. Das weitere Bild ist zu einem, zu dem ersten Zeitpunkt zeitlich versetzten, weiteren Zeitpunkt erfasst. Im Schritt 304 des Ermittelns wird eine stationäre Fläche in dem Erfassungsbereich unter Verwendung des Bildpaars, der Stereobasis und einer Stereoskopie-Verarbeitungsvorschrift ermittelt, um einen Neigungswinkel des Stereo-Video-Systems zu dieser stationären Fläche zu erhalten. Im Schritt 306 des Bestimmens wird die stationäre Fläche unter Verwendung des ersten Bilds des Bildpaars, des weiteren Bilds und einer Fluss-Verarbeitungsvorschrift bestimmt, um einen Vergleichswinkel zu erhalten. Dabei wird ein optischer Fluss zwischen dem ersten Bild und dem weiteren Bild erfasst, wenn sich das Stereo-Video-System zwischen dem ersten Zeitpunkt und dem weiteren Zeitpunkt um eine Wegstrecke bewegt hat. Im Schritt 308 des Vergleichens wird der Neigungswinkel mit dem Vergleichswinkel unter Verwendung einer Vergleichsvorschrift verglichen, um die Veränderung des relativen Gierwinkels zu erkennen.

In einem Ausführungsbeispiel wird im Schritt 302 des Einlesens zumindest ein weiteres Bildpaar eingelesen. Das weitere Bildpaar ist zeitlich versetzt zu dem Bildpaar erfasst. Im Schritt 304 des Ermittelns wird ein weiterer Neigungswinkel unter Verwendung des weiteren Bildpaars ermittelt. Das Verfahren weist ferner einen Schritt der Bewegungs-Erkennung auf, in dem der Neigungswinkel mit dem weiteren Neigungswinkel verglichen wird, um eine Nickbewegung des Stereo-Video-Systems zu erkennen. Durch eine Bewegung des Stereo-Video-Systems verändert sich ein Blickwinkel der Kameras auf den Erfassungsbereich.

In einem Ausführungsbeispiel wird im Schritt 302 des Einlesens das weitere Bild als ein Bestandteil des weiteren Bildpaars eingelesen. Das Ermitteln des Neigungswinkels erfolgt zyklisch. Dabei werden für die Stereoskopie die zusammengehörigen Bilder der Bildpaare verwendet. Für den optischen Fluss werden aufeinander abfolgende Bilder einer der Kameras verwendet.

In einem Ausführungsbeispiel wird der Schritt 308 des Vergleichens ausgeführt, wenn die Nickbewegung kleiner als ein Schwellenwert ist. Beispielsweise wird verglichen, wenn die Bewegung zwischen zwei aufeinanderfolgenden Bildpaaren kleiner als 5°, insbesondere kleiner als 2°, insbesondere kleiner als 0,5° ist.

In einem Ausführungsbeispiel wird im Schritt 306 des Bestimmens der Vergleichswinkel unter Verwendung der Nickbewegung bestimmt. Dazu wird der Winkel der Nickbewegung zwischen zwei Bildern bei der Berechnung des optischen Flusses zwischen den zwei Bildern berücksichtigt. Beim optischen Fluss wirkt sich die Nickbewegung auf alle Vektoren des optischen Flusses gleichmäßig aus. Ebenso wirken sich Gierbewegungen auf alle Vektoren gleich aus.

In einem Ausführungsbeispiel weist das Verfahren einen Schritt des Rekalibrierens des Stereo-Video-Systems auf. Dabei werden einzelne Gierwinkel der Kameras unter Verwendung der Veränderung des relativen Gierwinkels rekalibriert, wenn die Veränderung des relativen Gierwinkels größer als ein Toleranzwert ist. Das Rekalibrieren erfolgt mechanisch, elektronisch und algorithmisch, vorzugsweise algorithmisch. Dabei wird eine Referenz in zumindest einem der Bilder für die Stereoskopie verschoben. Zumindest eine der Kameras kann auch entgegen der Veränderung des relativen Gierwinkels gedreht werden.

In einem Ausführungsbeispiel erfolgt das Rekalibrieren schrittweise. Die einzelnen Gierwinkel werden jeweils maximal um einen vorgegebenen Winkel korrigiert, um das Stereo-Video-System zu rekalibrieren. Wenn die Veränderung des relativen Gierwinkels größer als der Toleranzwert ist, wird die Referenz in zumindest einem Bild um einen vordefinierten Schritt verschoben. Beispielsweise kann die Referenz um eine vorbestimmte Anzahl Bildpunkte verschoben werden. Durch kleine Schritte kann sich ein Korrekturwinkel asymptotisch an einen Optimalwert anpassen.

In einem Ausführungsbeispiel werden im Schritt 306 des Bestimmens Flussvektoren zwischen dem ersten Bild und dem weiteren Bild spaltenweise oder zeilenweise bestimmt, um die stationäre Fläche zu finden und den Vergleichswinkel zu bestimmen. Durch die zeilenweise oder spaltenweise Auswertung der Flussvektoren kann einfach eine Begrenzung der stationären Fläche gefunden werden. Die gefundene Begrenzung kann als Orientierung für die nächste Zeile oder Spalte dienen. Dadurch kann die stationäre Fläche schnell gefunden werden.

Mit anderen Worten zeigt Fig. 3 ein Ablaufdiagramm eines Verfahrens 300 zur Bestimmung des Gierwinkels für ein dekalibriertes Stereo-Video-Kamerasystem auf Basis einer Stereo-Oberflächenbestimmung und einer Mono-Oberflächenbestimmung.

Eine Fahrbahnebene kann mittels eines Stereo-Video-Kamerasystems bestimmt werden. Ebenso kann auf Basis einer sich bewegenden Kamera mithilfe des optischen Flusses eine 3D-Rekonstruktion einer Szene einschließlich Fahrbahnebene durchgeführt werden (Structure from Motion; SfM). Durch eine Kombination dieser Vorgehensweisen kann eine Dekalibrierung des Stereo-Video-Kamerasystems erkannt werden und kontinuierlich durch eine Selbstkalibrierung rekalibriert werden. Bisherige Ansätze zur kontinuierlichen Selbstkalibrierung sind entweder sehr rechenintensiv oder können Ungenauigkeiten bei der Bestimmung des Gierwinkels aufweisen.

Der hier vorgestellte Ansatz beschreibt eine Kalibration eines Videosystems aus der kombinierten Auswertung von Mono- und Stereo-Merkmalen.

SfM kann für die Bestimmung verwendet werden (z.B. wenn es für andere Funktionen sowieso berechnet wird), es ist jedoch deutlich effizienter einen (vorher bereits erwähnten) Spaltenansatz zu verwenden, ohne eine komplette Rekonstruktion auf Basis des optischen Flusses zu machen. Rein visuell basierte SfM-Ansätze können nicht die Skala der rekonstruierten Umgebung schätzen. Da im vorliegenden Fall aber nur der Winkel benötigt wird, ist dies kein Problem für den Algorithmus.

Es wird der Gierwinkel zwischen linker und rechter Kamera eines zu überprüfenden, eventuell dekalibrierten Kamerasystems ermittelt. Die Bestimmung des Gierwinkels erfolgt dabei über den Vergleich zwischen der ermittelten Fahrbahnoberfläche aus den Stereo-Bildpaaren und der ermittelten Fahrbahnoberfläche aus dem optischen Fluss.

Dadurch ergibt sich eine genauere Bestimmung des Gierwinkels als bei bisherigen Ansätzen. Mit dem ermittelten Gierwinkel ist nach einer Rekalibrierung eine genauere Entfernungsmessung im Disparitätsbild möglich.

Der hier vorgestellte Ansatz kann in Echtzeit auf aktueller Steuergeräte-Hardware implementiert werden.

Fig. 4 zeigt ein Flussdiagramm 400 eines Ablaufs eines Verfahrens zum Erkennen einer Veränderung des relativen Gierwinkels an einem Stereo-Video-System für ein Fahrzeug gemäß einem Ausführungsbeispiel der vorliegenden Erfindung. Der Ablauf 400 beginnt gemäß diesem Ausführungsbeispiel mit einer Rektifizierung 402 von Bildern des Stereo-Video-Systems. Die Rektifizierung ist keine Voraussetzung für den Mono-Pfad, nur eine Vereinfachung. Im Allgemeinen kann der Neigungswinkel der Oberfläche auch auf nichtrektifizierten Bildern berechnet werden. Für den Stereo-Pfad muss zwar eine Rektifizierung erfolgen, diese kann aber auch nach der Disparitäts- und Abstandsschätzung durchgeführt werden. Die Rektifizierung 402 stellt rektifizierte Bilder bereit. Anschließend werden zwei parallele Zweige für den Ablauf 400 durchlaufen. Im ersten Zweig wird ein rektifiziertes Stereo-Bildpaar 404 des Stereo-Video-Systems für eine Disparitätsschätzung 406 eingelesen. In der Disparitätsschätzung 406 wird eine Disparitätskarte 408 des Stereo-Bildpaars 404 erstellt. Die Disparitätskarte 408 wird in einer ersten Fahrbahnoberflächenschätzung 410 zum Ermitteln einer ersten Lage 412 einer Ebene der Fahrbahn in dem Stereo-Bildpaar 404 verwendet. Im zweiten Zweig werden zumindest zwei zeitlich versetzt aufgenommene Mono-Bilder 414 zum Bestimmen eines optischen Flusses 416 eingelesen. Als optischer Fluss werden zweidimensionale Flussvektoren 418 zwischen den Mono-Bildern 414 bereitgestellt. Die Flussvektoren 418 werden von einer zweiten Fahrbahnoberflächenschätzung 420 zum Ermitteln einer zweiten Lage 422 der Ebene der Fahrbahn in den Mono-Bildern 414 verwendet. Die zwei Zweige des Ablaufs 400 werden wieder vereinigt, indem die erste Lage 412 und die zweite Lage 422 miteinander verglichen werden. Wenn eine Abweichung der beiden Lagen 412, 422 erkannt wird, erfolgt eine Selbstkalibrierung 424 des Stereo-Video-Systems. Da der Ablauf 400 fortlaufend durchlaufen wird, ist die Selbstkalibrierung 424 kontinuierlich.

Die Ermittlung des Gierwinkels zwischen linker und rechter Kamera ist notwendiger Bestandteil der kontinuierlichen Selbstkalibrierung des Stereo-Video-Kamerasystems.

Auf Basis eines naiven Ansatzes, wie beispielsweise einer Epipolar-Bedingung, wird die Kalibration überwacht. Erst bei erkannter Dekalibration des Systems wird eine Selbstkalibration von Roll- und Nickwinkel vorgenommen.

Der verbleibende Gierwinkel-Fehler wird in mehreren Schritten ermittelt. Der Gierwinkel-Fehler sollte zwar nach der Kompensation von Nick- und Rollwinkel kompensiert werden, dies ist aber nicht notwendig, da der Gierwinkel separat kompensiert wird. Zuerst wird die Fahrbahnoberfläche 412 auf Basis des Stereo-Video-Kamerasystems berechnet. Aus der Fahrbahnoberflächenberechnung 410 lässt sich der Neigungswinkel der Ebene zum Kamerasystem bestimmen. Dieser Vorgang wird für das folgende Stereo-Bildpaar 404 wiederholt. Abweichungen im Neigungswinkel deuten beispielsweise auf ein Einnicken des Fahrzeugs hin. Entsprechende Korrekturen werden in folgenden Schritten berücksichtigt.

Für eines der beiden Bilder wird der optische Fluss 416 im Bild zwischen den beiden Zeitpunkten berechnet. Wenn sich das Kamerasystem durch Fahren des Fahrzeugs zwischen den beiden Zeitpunkten bewegt hat, kann aus den Daten die Fahrbahnoberfläche 422 ermittelt werden. Aus der berechneten Fahrbahnoberfläche 422 wird dann der Neigungswinkel der Fahrbahnoberfläche 422 zum Kamerasystem bestimmt. Die Berechnung 420 der Fahrbahnoberfläche auf Basis des optischen Flusses 416 kann entweder über eine 3D-Rekonstruktion erfolgen (SfM) oder die Fahrbahnoberfläche 422 wird in der Art einer statistischen Regression direkt aus der Divergenz des Flussfeldes 418 bestimmt.

Wenn ein Einnicken des Fahrzeugs festgestellt wurde, kann der gemessene Unterschied zwischen den verschiedenen Neigungswinkeln aus Stereo in der weiteren Berechnung berücksichtigt werden.

Ebenso kann die Bestimmung des Kamera-Gierwinkels in diesem Fall unterbleiben.

Für den Fall, dass kein Einnicken des Fahrzeugs vorliegt, kann eine notwendige Korrektur des Gierwinkels zwischen den Kameras einfach bestimmt werden.

Wenn sich die Neigungswinkel der Fahrbahnoberflächenbestimmungen 410, 420 aus Stereo und SfM unterscheiden, liegt eine Dekalibrierung des Stereo-Video-Kamerasystems vor. Der Gierwinkel des Stereo-Kamera-Systems hat einen direkten Einfluss auf die Bestimmung 410 der Fahrbahnoberfläche 412 des Stereo-Kamera-Systems und kann darüber ermittelt werden.

Die Stabilität des Systems kann über eine geeignete Update-Strategie erhöht werden. Beispielsweise kann ein maximaler Kompensationswinkel bestimmt werden. Damit nähert sich der Gierwinkel schrittweise nach mehreren Durchläufen des Verfahrens seinem Optimum.

Eine mechanische Dekalibrierung des Stereo-Video-Kamerasystems kann durch Verdrehen oder einer Verschiebung einer Kamera erfolgen. Das System kalibriert neu, wenn das Fahrzeug in Bewegung ist, da die Kalibrierung vom optischen Fluss abhängig ist.

Die Bestimmung des Gierwinkelfehlers kann als Bestandteil der kontinuierlichen Selbstkalibrierung von Stereo-Video-Kamerasystemen verwendet werden.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden.

Ferner können erfindungsgemäße Verfahrensschritte wiederholt sowie in einer anderen als in der beschriebenen Reihenfolge ausgeführt werden.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Verfahren (300) zum Erkennen einer Veränderung des relativen Gierwinkels (106) an einem Stereo-Video-System (102) für ein Fahrzeug (100), wobei das Stereo-Video-System (102) eine erste Kamera (110) und eine zweite Kamera (112) aufweist, die auf einen gemeinsamen Erfassungsbereich (114) ausgerichtet sind und um eine Stereobasis (116) zueinander versetzt angeordnet sind, und wobei unter der Veränderung des relativen Gierwinkels eine Differenz von Seitenrichtungswinkeln der zwei Kameras (110, 112) verstanden wird, wobei das Verfahren (300) die folgenden Schritte aufweist:
Einlesen (302) eines Bildpaars (404) von den Kameras (110, 112) und eines weiteren Bilds von der ersten Kamera (110), wobei das Bildpaar (404) ein, zu einem ersten Zeitpunkt erfasstes erstes Bild der ersten Kamera (110) und ein zu dem ersten Zeitpunkt erfasstes zweites Bild der zweiten Kamera (112) umfasst und das weitere Bild zu einem zu dem ersten Zeitpunkt zeitlich versetzten weiteren Zeitpunkt erfasst ist;
Ermitteln (304) einer stationären Fläche (108, 122) in dem Erfassungsbereich (114) unter Verwendung des Bildpaars (404), der Stereobasis (116) und einer Stereoskopie-Verarbeitungsvorschrift, um einen Neigungswinkel einer Fläche (124) des Stereo-Video-Systems (102) als Referenzwinkel zu erhalten, wobei der Neigungswinkel der Winkel ist, der zwischen einer von dem Stereo-Video-System ermittelten Ebene und einer Referenzebene aufgespannt wird;
Bestimmen (306) der stationären Fläche (108) unter Verwendung des ersten Bilds des Bildpaars (404), des weiteren Bilds und einer Korrespondenz-Transformation-Verarbeitungsvorschrift, um einen Vergleichswinkel zu erhalten, wobei eine Korrespondenz-Transformation zwischen dem ersten Bild und dem weiteren Bild erfasst wird, wenn sich das Stereo-Video-System (102) zwischen dem ersten Zeitpunkt und dem weiteren Zeitpunkt um eine Wegstrecke (126) bewegt hat; und
Vergleichen (308) des Neigungswinkels einer Fläche (124) mit dem Referenzwinkel unter Verwendung einer Vergleichsvorschrift, um die Veränderung des relativen Gierwinkels (106) zu erkennen.

2. Verfahren (300) gemäß Anspruch 1, bei dem im Schritt (302) des Einlesens zumindest ein weiteres Bildpaar (404) eingelesen wird, wobei das weitere Bildpaar (404) zeitlich versetzt zu dem Bildpaar (404) erfasst ist, wobei im Schritt (304) des Ermitteins ein weiterer Neigungswinkel einer Fläche (124) unter Verwendung des weiteren Bildpaars (404) ermittelt wird und das Verfahren (300) einen Schritt der Bewegungs-Erkennung aufweist, in dem der Neigungswinkel einer Fläche (124) mit dem weiteren Neigungswinkel einer Fläche (124) verglichen wird, um eine Nickbewegung des Stereo-Video-Systems (102) zu erkennen.

3. Verfahren (300) gemäß Anspruch 2, bei dem im Schritt (302) des Einlesens das weitere Bild als ein Bestandteil des weiteren Bildpaars (404) eingelesen wird.

4. Verfahren (300) gemäß einem der vorangegangenen Ansprüche, bei dem der Schritt (308) des Vergleichens ausgeführt wird, wenn die Nickbewegung kleiner als ein Schwellenwert ist.

5. Verfahren (300) gemäß einem der vorangegangenen Ansprüche, bei dem im Schritt (306) des Bestimmens der Referenzwinkel unter Verwendung der Nickbewegung bestimmt wird.

6. Verfahren (300) gemäß einem der vorangegangenen Ansprüche, mit einem Schritt des Rekalibrierens des Stereo-Video-Systems (102), wobei eine Korrektur des relativen Gierwinkels der Kameras (110, 112) unter Verwendung der Veränderung des relativen Gierwinkels (106) rekalibriert werden, wenn die Veränderung des relativen Gierwinkels (106) größer als ein Toleranzwert ist.

7. Verfahren (300) gemäß Anspruch 6, bei dem das Rekalibrieren schrittweise erfolgt, wobei die einzelnen Gierwinkel jeweils maximal um einen vorgegebenen Winkel korrigiert werden, um das Stereo-Video-System (102) zu rekalibrieren.

8. Verfahren (300) gemäß einem der vorangegangenen Ansprüche, bei dem im Schritt (306) des Bestimmens Flussvektoren zwischen dem ersten Bild und dem weiteren Bild spaltenweise oder zeilenweise bestimmt werden, um die stationäre Fläche (108) zu finden und den Vergleichswinkel zu bestimmen.

9. Steuergerät (104) zum Erkennen einer Veränderung des relativen Gierwinkels (106) an einem Stereo-Video-System (102) für ein Fahrzeug (100), wobei das Stereo-Video-System (102) eine erste Kamera (110) und eine zweite Kamera (112) aufweist, die auf einen gemeinsamen Erfassungsbereich (114) ausgerichtet sind und um eine Stereobasis (116) zueinander versetzt angeordnet sind, und wobei unter der Veränderung des relativen Gierwinkels eine Differenz von Seitenrichtungswinkeln der zwei Kameras (110, 112) verstanden wird, wobei das Steuergerät (104) die folgenden Merkmale aufweist:
eine Einrichtung (200) zum Einlesen eines Bildpaars (404) von den Kameras (110, 112) und eines weiteren Bilds von der ersten Kamera (110), wobei das Bildpaar (404) ein zu einem ersten Zeitpunkt erfasstes erstes Bild der ersten Kamera (110) und ein zu dem ersten Zeitpunkt erfasstes zweites Bild der zweiten Kamera (112) umfasst und das weitere Bild zu einem zu dem ersten Zeitpunkt zeitlich versetzten weiteren Zeitpunkt erfasst ist;
eine Einrichtung (202) zum Ermitteln einer stationären Fläche (108, 122) in dem Erfassungsbereich (114) unter Verwendung des Bildpaars (404), der Stereobasis (116) und einer Stereoskopie-Verarbeitungsvorschrift, um einen Neigungswinkel einer Fläche (124) des Stereo-Video-Systems (102) als Referenzwinkel zu erhalten, wobei der Neigungswinkel der Winkel ist, der zwischen einer von dem Stereo-Video-System ermittelten Ebene und einer Referenzebene aufgespannt wird;
eine Einrichtung (204) zum Bestimmen der stationären Fläche (108) unter Verwendung des ersten Bilds des Bildpaars (404), des weiteren Bilds und einer Korrespondenz-Transformation-Verarbeitungsvorschrift, um einen Vergleichswinkel zu erhalten, wobei eine Korrespondenz-Transformation zwischen dem ersten Bild und dem weiteren Bild erfasst wird, wenn sich das Stereo-Video-System (102) zwischen dem ersten Zeitpunkt und dem weiteren Zeitpunkt um eine Wegstrecke (126) bewegt hat; und
eine Einrichtung (206) zum Vergleichen des Neigungswinkels einer Fläche (124) mit dem Referenzwinkel unter Verwendung einer Vergleichsvorschrift, um die Veränderung des relativen Gierwinkels (106) zu erkennen.

10. Computer-Programmprodukt mit Programmcode zur Durchführung des Verfahrens nach einem der Ansprüche 1 bis 8, wenn das Programmprodukt auf einer Vorrichtung ausgeführt wird.

## Claims

1. Method (300) for detecting a change in the relative yaw angle (106) on a stereo video system (102) for a vehicle (100), wherein the stereo video system (102) has a first camera (110) and a second camera (112) that are directed towards a common recording area (114) and are arranged offset to one another by a stereo base (116), and wherein the change in the relative yaw angle is understood to mean a difference in lateral direction angles of the two cameras (110, 112), wherein the method (300) comprises the following steps:
reading (302) an image pair (404) from the cameras (110, 112) and a further image from the first camera (110), wherein the image pair (404) comprises a first image from the first camera (110) recorded at a first time and a second image from the second camera (112) recorded at the first time and the further image is recorded at a further time temporally offset from the first time;
establishing (304) a stationary surface (108, 122) in the recording area (114) using the image pair (404), the stereo base (116) and a stereoscopic processing rule, so as to obtain an angle of incline of a surface (124) of the stereo video system (102) as a reference angle, wherein the angle of incline is the angle that is spanned between a plane established by the stereo video system and a reference plane;
determining (306) the stationary surface (108) using the first image of the image pair (404), the further image and a correspondence transformation processing rule, so as to obtain a comparison angle, wherein a correspondence transformation is recorded between the first image and the further image if the stereo video system (102) has moved by a distance (126) between the first time and the further time; and
comparing (308) the angle of incline of a surface (124) with the reference angle using a comparison rule, so as to detect the change in the relative yaw angle (106).

2. Method (300) according to Claim 1, wherein, in the reading step (302), at least one further image pair (404) is read, wherein the further image pair (404) is recorded in a manner temporally offset from the image pair (404), wherein, in the establishment step (304), a further angle of incline of a surface (124) is established using the further image pair (404), and the method (300) comprises a step of motion detection in which the angle of incline of a surface (124) is compared with the further angle of incline of a surface (124) so as to detect a pitching motion of the stereo video system (102).

3. Method (300) according to Claim 2, wherein, in the reading step (302), the further image is read as part of the further image pair (404).

4. Method (300) according to one of the preceding claims, wherein the comparison step (308) is executed if the pitching motion is smaller than a threshold value.

5. Method (300) according to one of the preceding claims, wherein, in the determination step (306), the reference angle is determined using the pitching motion.

6. Method (300) according to one of the preceding claims, having a step of recalibrating the stereo video system (102), wherein a correction of the relative yaw angle of the cameras (110, 112) is recalibrated using the change in the relative yaw angle (106) if the change in the relative yaw angle (106) is greater than a tolerance value.

7. Method (300) according to Claim 6, wherein the recalibration takes place in steps, wherein the individual yaw angles are each corrected at most by a predefined angle so as to recalibrate the stereo video system (102).

8. Method (300) according to one of the preceding claims, wherein, in the determination step (306), flow vectors are determined between the first image and the further image in columns or in rows so as to find the stationary surface (108) and to determine the comparison angle.

9. Controller (104) for detecting a change in the relative yaw angle (106) on a stereo video system (102) for a vehicle (100), wherein the stereo video system (102) has a first camera (110) and a second camera (112) that are directed towards a common recording area (114) and are arranged offset to one another by a stereo base (116), and wherein the change in the relative yaw angle is understood to mean a difference in lateral direction angles of the two cameras (110, 112), wherein the controller (104) has the following features:
an apparatus (200) for reading an image pair (404) from the cameras (110, 112) and a further image from the first camera (110), wherein the image pair (404) comprises a first image from the first camera (110) recorded at a first time and a second image from the second camera (112) recorded at the first time and the further image is recorded at a further time temporally offset from the first time;
an apparatus (202) for establishing a stationary surface (108, 122) in the recording area (114) using the image pair (404), the stereo base (116) and a stereoscopic processing rule, so as to obtain an angle of incline of a surface (124) of the stereo video system (102) as a reference angle, wherein the angle of incline is the angle that is spanned between a plane established by the stereo video system and a reference plane;
an apparatus (204) for determining the stationary surface (108) using the first image of the image pair (404), the further image and a correspondence transformation processing rule, so as to obtain a comparison angle, wherein a correspondence transformation is recorded between the first image and the further image if the stereo video system (102) has moved by a distance (126) between the first time and the further time; and
an apparatus (206) for comparing the angle of incline of a surface (124) with the reference angle using a comparison rule, so as to detect the change in the relative yaw angle (106).

10. Computer program product containing program code for performing the method according to one of Claims 1 to 8 when the program product is executed on a device.

## Revendications

1. Procédé (300) de reconnaissance d'une modification de l'angle de lacet relatif (106) au niveau d'un système vidéo stéréoscopique (102) pour un véhicule (100), le système vidéo stéréoscopique (102) possédant une première caméra (110) et une deuxième caméra (112) qui sont orientées sur une zone d'acquisition (114) commune et sont disposées de manière décalée l'une par rapport à l'autre autour d'une base stéréoscopique (116), et la modification de l'angle de lacet relatif désignant une différence entre les angles de direction latérale des deux caméras (110, 112), le procédé (300) comprenant les étapes suivantes :
lecture (302) d'une paire d'images (404) depuis les caméras (110, 112) et d'une image supplémentaire depuis la première caméra (110), la paire d'images (404) comprenant une première image de la première caméra (110) acquise à un premier instant et une deuxième image de la deuxième caméra (112) acquise au premier instant et l'image supplémentaire étant acquise à un instant supplémentaire décalé dans le temps par rapport au premier instant ;
détermination (304) d'une surface fixe (108, 122) dans la zone d'acquisition (114) en utilisant la paire d'images (404), la base stéréoscopique (116) et une consigne de traitement de stéréoscopie en vue d'obtenir un angle d'inclinaison d'une surface (124) du système vidéo stéréoscopique (102) en tant qu'angle de référence, l'angle d'inclinaison étant l'angle qui est formé entre un plan déterminé par le système vidéo stéréoscopique et un plan de référence ;
définition (306) de la surface fixe (108) en utilisant la première image de la paire d'images (404), l'image supplémentaire et une consigne de traitement de transformation de correspondance afin d'obtenir un angle de comparaison, une transformation de correspondance entre la première image et l'image supplémentaire étant acquise lorsque le système vidéo stéréoscopique (102) s'est déplacé d'une distance (126) entre le premier instant et l'instant supplémentaire ; et
comparaison (308) de l'angle d'inclinaison d'une surface (124) avec l'angle de référence en utilisant une consigne de comparaison afin de reconnaître la modification de l'angle de lacet relatif (106).

2. Procédé (300) selon la revendication 1, avec lequel, dans l'étape (302) de lecture, au moins une paire d'images supplémentaire (404) est lue, la paire d'images supplémentaire (404) étant acquise avec un décalage dans le temps par rapport à la paire d'images (404), dans l'étape (304) de détermination un angle d'inclinaison supplémentaire d'une surface (124) étant déterminé en utilisant la paire d'images supplémentaire (404) et le procédé (300) comprenant une étape de reconnaissance de mouvement dans laquelle l'angle d'inclinaison d'une surface (124) est comparé avec l'angle d'inclinaison supplémentaire d'une surface (124) afin de reconnaître un mouvement de tangage du système vidéo stéréoscopique (102).

3. Procédé (300) selon la revendication 2, avec lequel, dans l'étape (302) de lecture, l'image supplémentaire est lue en tant que partie constitutive de la paire d'images supplémentaire (404).

4. Procédé (300) selon l'une des revendications précédentes, avec lequel l'étape (308) de comparaison est exécutée lorsque le mouvement de tangage est inférieur à une valeur de seuil.

5. Procédé (300) selon l'une des revendications précédentes, avec lequel, dans l'étape (306) de définition, l'angle de référence est défini en utilisant le mouvement de tangage.

6. Procédé (300) selon l'une des revendications précédentes, comprenant une étape de réétalonnage du système vidéo stéréoscopique (102), une correction de l'angle de lacet relatif des caméras (110, 112) étant réétalonnée en utilisant la modification de l'angle de lacet relatif (106) lorsque la modification de l'angle de lacet relatif (106) est supérieure à une valeur de tolérance.

7. Procédé (300) selon la revendication 6, avec lequel le réétalonnage s'effectue étape par étape, les angles de lacet individuels étant respectivement corrigés au maximum d'un angle prédéfini en vue de réétalonner le système vidéo stéréoscopique (102).

8. Procédé (300) selon l'une des revendications précédentes, avec lequel, dans l'étape (306) de définition, des vecteurs de flux sont définis colonne par colonne ou ligne par ligne entre la première image et l'image supplémentaire en vue de trouver la surface fixe (108) et définir l'angle de comparaison.

9. Contrôleur (104) destiné à la reconnaissance d'une modification de l'angle de lacet relatif (106) au niveau d'un système vidéo stéréoscopique (102) pour un véhicule (100), le système vidéo stéréoscopique (102) possédant une première caméra (110) et une deuxième caméra (112) qui sont orientées sur une zone d'acquisition (114) commune et sont disposées de manière décalée l'une par rapport à l'autre autour d'une base stéréoscopique (116), et la modification de l'angle de lacet relatif désignant une différence entre les angles de direction latérale des deux caméras (110, 112), le contrôleur (104) possédant les caractéristiques suivantes :
un dispositif (200) destiné à la lecture d'une paire d'images (404) depuis les caméras (110, 112) et d'une image supplémentaire depuis la première caméra (110), la paire d'images (404) comprenant une première image de la première caméra (110) acquise à un premier instant et une deuxième image de la deuxième caméra (112) acquise au premier instant et l'image supplémentaire étant acquise à un instant supplémentaire décalé dans le temps par rapport au premier instant ;
un dispositif (202) destiné à la détermination d'une surface fixe (108, 122) dans la zone d'acquisition (114) en utilisant la paire d'images (404), la base stéréoscopique (116) et une consigne de traitement de stéréoscopie en vue d'obtenir un angle d'inclinaison d'une surface (124) du système vidéo stéréoscopique (102) en tant qu'angle de référence, l'angle d'inclinaison étant l'angle qui est formé entre un plan déterminé par le système vidéo stéréoscopique et un plan de référence ;
un dispositif (204) destiné à la définition de la surface fixe (108) en utilisant la première image de la paire d'images (404), l'image supplémentaire et une consigne de traitement de transformation de correspondance afin d'obtenir un angle de comparaison, une transformation de correspondance entre la première image et l'image supplémentaire étant acquise lorsque le système vidéo stéréoscopique (102) s'est déplacé d'une distance (126) entre le premier instant et l'instant supplémentaire ; et
un dispositif (206) destiné à la comparaison de l'angle d'inclinaison d'une surface (124) avec l'angle de référence en utilisant une consigne de comparaison afin de reconnaître la modification de l'angle de lacet relatif (106).

10. Produit de programme informatique comprenant un code de programme destiné à mettre en oeuvre le procédé selon l'une des revendications 1 à 8 lorsque le produit de programme est exécuté sur un arrangement.
